# EUROPEAN PATENT APPLICATION

(11) **EP 4 822 752 A1**
(43) Date of publication of application: **14.10.2026**
(21) Application number: 26155878.7
(22) Date of filing: 03.02.2026
(51) Int. Cl.: H01M 4/04, H01M 4/134, H01M 4/1395, H01M 4/36, H01M 4/38, H01M 4/587, H01M 4/62, H01M 10/0525

(54) **NEGATIVE ELECTRODE ACTIVE MATERIAL, RECHARGEABLE LITHIUM BATTERY INCLUDING THE SAME, AND METHOD FOR MANUFACTURING THE SAME**

(30) Priority: 08.04.2025 KR 20250045392
(71) Applicant: SAMSUNG SDI CO., LTD., Yongin-si, Gyeonggi-do 17084 (KR)
(72) Inventor: Kim, Yookyung, 17084 Yongin-si, Gyeonggi-do (KR); Kim, Deok-Hyun, 17084 Yongin-si, Gyeonggi-do (KR); Kang, Eunji, 17084 Yongin-si, Gyeonggi-do (KR); Kim, Youngugk, 17084 Yongin-si, Gyeonggi-do (KR); Oh, Doori, 17084 Yongin-si, Gyeonggi-do (KR); Kim, Jaewon, 17084 Yongin-si, Gyeonggi-do (KR); Kim, Hyejin, 17084 Yongin-si, Gyeonggi-do (KR); Lee, Banseok, 17084 Yongin-si, Gyeonggi-do (KR)
(74) Representative: Michalski Hüttermann & Partner mbB

(57) **Abstract**

A negative electrode active material, a rechargeable lithium battery including the same, and a method for manufacturing the same are provided. The negative electrode active material includes a silicon-carbon composite in the form of particle. The silicon-carbon composite includes a secondary particle in which a plurality of primary particles is agglomerated and a carbon coating layer around (e.g., surrounding) the secondary particle. The silicon-carbon composite includes macro pores having a pore diameter of about 50 nm or more. A volume ratio of the macro pores is about 10% to about 50% relative to a total pore volume of the silicon-carbon composite. The primary particle includes a silicon nanoparticle, and the carbon coating layer includes an amorphous carbon.

## Description

### CROSS-REFERENCE TO RELATED APPLICATION

The present application claims priority to and the benefit of Korean Patent Application No. 10-2025-0045392, filed on April 8, 2025, in the Korean Intellectual Property Office.

### BACKGROUND

### 1. Field

One or more embodiments of the present disclosure relate to a negative electrode active material, a rechargeable lithium battery including the same, and a method for manufacturing the same.

### 2. Description of the Related Art

Recently, with the rapid proliferation of battery-powered electronic devices such as mobile phones, notebook computers, and/or electric vehicles, the demand for rechargeable batteries with high energy density and large capacity has significantly increased. In response, extensive research and development efforts have been directed toward enhancing the performance of such rechargeable batteries, including rechargeable lithium batteries.

A rechargeable lithium battery generally includes a positive electrode, a negative electrode, and an electrolyte. Each of the positive electrode and the negative electrode contain an active material that is capable of lithium-ion intercalation and deintercalation. Electrical energy is generated through oxidation and reduction reactions as lithium ions move between the electrodes during charging and discharging. For example, during the discharge process, the electrical energy is generated when lithium ions are intercalated into the positive electrode and/or deintercalated from the negative electrode.

### SUMMARY

One or more aspects of embodiments of the present disclosure are directed toward a negative electrode active material that has enhanced, excellent or suitable capacity, efficiency, and cycle-life characteristics, and a rechargeable lithium battery including the same.

One or more aspects of embodiments of the present disclosure are directed toward a method for manufacturing the negative electrode active material.

Additional aspects will be set forth in part in the description which follows and, in part, will be apparent from the description, or may be learned by practice of the presented embodiments of the disclosure.

According to one or more embodiments of the present disclosure, a negative electrode active material may include a silicon-carbon composite. The silicon-carbon composite may include: a secondary particle in which a plurality of primary particles is agglomerated; and a carbon coating layer around (e.g., surrounding) the secondary particle. The silicon-carbon composite may include macro pores having a pore diameter of about 50 nm or more, a volume ratio of the macro pores is about 10% to about 50% relative to a total pore volume of the silicon-carbon composite, the primary particle may include a silicon nanoparticle, and the carbon coating layer may include an amorphous carbon.

According to one or more embodiments of the present disclosure, a rechargeable lithium battery may include a negative electrode including the negative electrode active material described above; a positive electrode; and a separator.

According to one or more embodiments of the present disclosure, a method for manufacturing a negative electrode active material may include: mixing a silicon precursor and a solvent to prepare a mixture; natural-drying the mixture to obtain a dried product; grinding the dried product to obtain a ground product; and mixing the ground product with a carbon precursor and performing a heat treatment.

For example, by incorporating a silicon-carbon composite with controlled porosity and a carbon coating, the disclosed embodiments aim to improve structural stability, accommodate volume expansion during cycling, and enhance overall electrochemical performance. These advancements contribute to the development of lithium batteries with higher energy density, longer cycle life, and improved reliability for a wide range of applications.

### BRIEF DESCRIPTION OF DRAWINGS

The accompanying drawings are included to provide a further understanding of the disclosure and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.
FIG. 1 is a simplified conceptual diagram illustrating a rechargeable lithium battery according to one or more embodiments of the present disclosure.
FIGS. 2 to 5 are each a schematic diagram illustrating a rechargeable lithium battery according to one or more embodiments of the present disclosure.
FIG. 6 is a cross-sectional view of a negative electrode for a rechargeable lithium battery according to one or more embodiments of the present disclosure.
FIG. 7 is an enlarged cross-sectional view of a region M of FIG. 6 according to one or more embodiments of the present disclosure.
FIG. 8 is a diagram for explaining a first negative electrode active material according to one or more embodiments of the present disclosure.
FIG. 9 is a flowchart for explaining a method for manufacturing a first negative electrode active material according to one or more embodiments of the present disclosure.
FIG. 10 is a schematic diagram for illustrating step (e.g., act or task) S200 of FIG. 9.
FIG. 11 is a graph showing a pore size distribution of the negative electrode active material according to Example 3 and Comparative Example 2 of the present disclosure.

### DETAILED DESCRIPTION

To fully understand the configuration and effects of the present disclosure, one or more embodiments will be described with reference to the accompanying drawings. However, the present disclosure is not limited to the following example embodiments and may be implemented in one or more suitable forms. The example embodiments are provided solely to illustrate the present disclosure and to enable those skilled in the art to fully understand its scope.

In this disclosure, if (e.g., when) an element is described as being "on" another element, it may be directly on the other element, or one or more intervening elements may be present therebetween. In contrast, if (e.g., when) an element is referred to as being "directly on" another element, there are no intervening elements present therebetween. In the drawings, certain thicknesses may be exaggerated to better illustrate technical details. Throughout the disclosure, like reference numerals indicate like elements, and duplicative descriptions thereof may not be provided for conciseness.

One or more embodiments described herein may be illustrated using sectional and/or plan views, which are presented as idealized and illustrative examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe one or more suitable elements, these terms are merely used for distinction and do not imply any particular order or hierarchy. For example, a first element discussed herein could be termed a second element, without departing from the scope of the disclosure. The embodiments described and illustrated herein may include complementary variations.

Unless otherwise explicitly stated in this disclosure, singular forms may also include plural forms. For example, the singular forms "a," "an," "one," and "the" are intended to include the plural forms as well, unless the context clearly indicates otherwise. In addition, unless explicitly stated otherwise, the phrase "A or B," "A and/or B," "A/B," "at least one of A and B," "at least one selected from among A and B," or "at least one of A or B," may indicate "A but not B," "B but not A," and "A and B". The terms "comprise(s)/include(s)" and/or "comprising/including" and/or "has(have)/having" do not exclude the presence or addition of one or more other components. Additionally, the terms "comprise(s)/comprising," "include(s)/including," "has(have)/having", or other similar terms include or support the terms "consisting of" and "consisting essentially of," indicating the presence of stated features, numbers, steps, operations, elements, parts, and/or components, without or essentially without the presence of other features, numbers, steps, operations, elements, parts, components, and/or groups thereof. Further, the utilization of "may" when describing embodiments of the present disclosure refers to "one or more embodiments of the present disclosure".

In this disclosure, the phrase "combination thereof" may refer to a mixture, a stack, a composite, a copolymer, an alloy, a blend, or a reaction product of constituents.

Unless otherwise specifically defined, the term "particle diameter" or "particle size" refers to an average particle diameter/size. The particle diameter/size may represent the median particle size (D50), which corresponds to the diameter/size of particles at 50 vol% in a cumulative particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter/size (D50) may be measured using widely suitable methods, such as a particle size analyzer, for example, HORIBA, LA-950 laser particle size analyzer, or by using transmission electron microscope (TEM) imaging, or scanning electron microscope (SEM) imaging. In one or more embodiments, dynamic light scattering may be used, where particle counts within size ranges are analyzed to calculate the average particle diameter (D50). In one or more embodiments, a laser scattering method may be employed, in which target particles are dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution. In the present disclosure, when particles are spherical, "diameter/size" indicates an average particle diameter/size, and when the particles are non-spherical, the "diameter/size" indicates an average major axis length of particles.

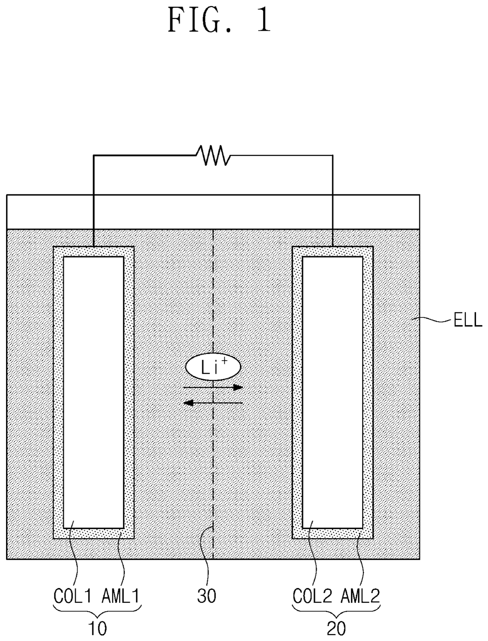

FIG. 1 is a simplified conceptual diagram illustrating a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart from each other across the separator 30. The separator 30 may be arranged between the positive electrode 10 and the negative electrode 20. The positive electrode 10, the negative electrode 20, and the separator 30 may be in contact with the electrolyte ELL. For example, the positive electrode 10, the negative electrode 20, and the separator 30 may be impregnated in the electrolyte ELL.

The electrolyte ELL may be a medium through which lithium ions are transferred and migrated between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 on (e.g., formed on) the current collector COL1. The positive electrode active material layer AML1 may include a positive electrode active material (e.g., in a form of particles) and further include a binder and/or a conductive material (e.g., an electron conductor).

In one or more embodiments, the positive electrode 10 may further include an additive that may serve as a sacrificial positive electrode.

An amount of the positive electrode active material may be about 90 wt% to about 99.5 wt% relative to (e.g., based on) a total weight of 100 wt% of the positive electrode active material layer AML1. An amount of each of the binder and the conductive material may be about 0.5 wt% to about 5 wt% relative to (e.g., based on) the total weight of 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, an (meth)acrylic resin, a polyester resin, and/or nylon, but embodiments of the present disclosure are not limited thereto.

The conductive material (e.g., an electrically conductive material) may be used to provide the electrode with conductivity (e.g., with improved electrical conductivity), and any suitable conductive material that does not cause an undesirable chemical change in the rechargeable lithium battery may be used as the conductive material. The conductive material may include, for example, a carbon-based material such as natural graphite, artificial graphite, carbon black, acetylene black, Ketjen black, carbon fibers, carbon nano-fibers, and carbon nano-tubes; a metal powder or a metal fiber containing one or more selected from among copper, nickel, aluminum, and silver; a conductive polymer such as a polyphenylene derivative; and/or a mixture thereof.

In one or more embodiments, aluminum (Al) may be used as the current collector COL1, but embodiments of the present disclosure are not limited thereto.

### Positive Electrode Active Material

The positive electrode active material in the positive electrode active material layer AML1 may include a compound (e.g., lithiated intercalation compound) that may reversibly intercalate and deintercalate lithium. For example, in one or more embodiments, the positive electrode active material may include at least one kind of composite oxide including lithium and a metal that is selected from among cobalt, manganese, nickel, and a combination thereof.

The composite oxide may include lithium transition metal composite oxides, for example, lithium-nickel-based oxides, lithium-cobalt-based oxides, lithium-manganese-based oxides, lithium-iron-phosphate-based compounds, cobalt-free nickel-manganese-based oxides, and/or a combination thereof.

In one or more embodiments, the positive electrode active material may include one or more compounds each independently expressed by any one selected from among the following chemical formulae: LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}O_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); and LiₐFePO₄ (where 0.90≤a≤1.8).

In the chemical formulae above, A may be nickel (Ni), cobalt (Co), manganese (Mn), or a combination thereof, X may be Al, Ni, Co, Mn, chromium (Cr), iron (Fe), magnesium (Mg), strontium (Sr), vanadium (V), a rare-earth element, or a combination thereof, D may be oxygen (O), fluorine (F), sulfur (S), phosphorous (P), or a combination thereof, G may be Al, Cr, Mn, Fe, Mg, lanthanum (La), cerium (Ce), Sr, V, or a combination thereof, and L¹ may be Mn, Al, or a combination thereof.

In one or more embodiments, the positive electrode active material may be a high-nickel-based positive electrode active material having a nickel amount of equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of a total metal excluding lithium in the lithium transition metal composite oxide. The high-nickel-based positive electrode active material may achieve high capacity and thus may be applied to a high-capacity and high-density rechargeable lithium battery.

### Separator 30

Based on a type (kind) of the rechargeable lithium battery, the separator 30 may be present between positive electrode 10 and the negative electrode 20. The separator 30 may include one or more selected from among polyethylene, polypropylene, and polyvinylidene fluoride, or may have a multi-layered separator thereof such as a polyethylene/polypropylene bi-layered separator, a polyethylene/polypropylene/polyethylene tri-layered separator, or a polypropylene/polyethylene/polypropylene tri-layered separator.

The separator 30 may include a porous substrate and a coating layer positioned on a (e.g., one) surface or both surfaces (e.g., two opposite surfaces) of the porous substrate, and the coating layer may include an organic material, an inorganic material, or a combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, a glass fiber, and polytetrafluoroethylene (e.g., Teflon), or may be a copolymer or a mixture including two or more of the materials mentioned above.

The organic material may include a polyvinylidenefluoride-based copolymer or a (meth)acrylic copolymer.

The inorganic material may include an inorganic particle selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, and/or a combination thereof, but embodiments of the present disclosure are not limited thereto.

In one or more embodiments, the organic material and the inorganic material may be present mixed in one coating layer or may be present as a stack of a coating layer including the organic material and a coating layer including an inorganic material.

### Electrolyte ELL

The electrolyte ELL for a rechargeable lithium battery may include a non-aqueous organic solvent and a lithium salt.

The non-aqueous organic solvent may serve as a medium for transmitting ions that participate in an electrochemical reaction of the rechargeable lithium battery.

The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol, and the aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane and/or 1.4-dioxolane; and/or sulfolanes.

The non-aqueous organic solvent may be used alone or in a mixture of two or more thereof.

In addition, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in the rechargeable lithium battery and plays a role in enabling a basic operation of the rechargeable lithium battery and in promoting the movement of lithium ions between the positive electrode and the negative electrode. The lithium salt may include, for example, at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are each an integer of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

### Rechargeable lithium battery

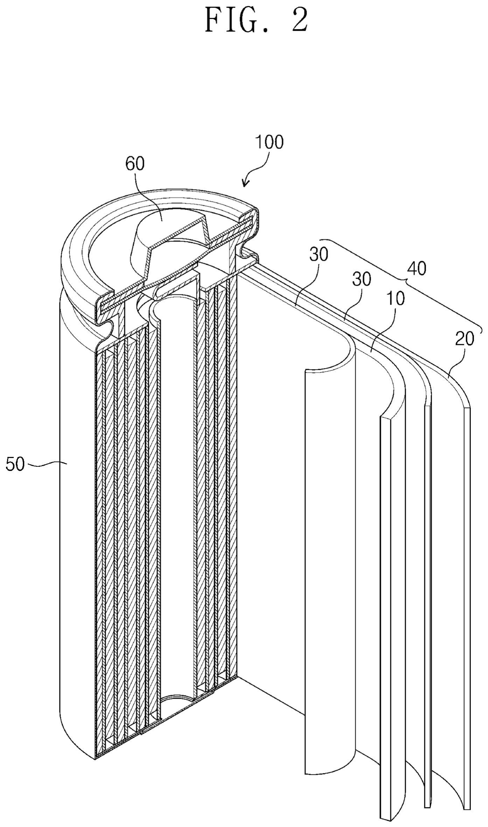

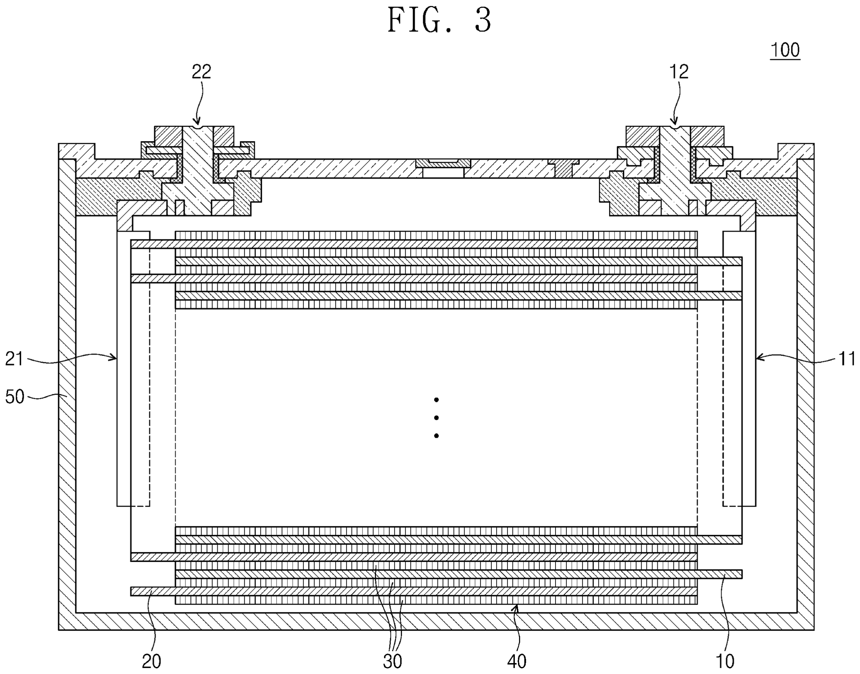

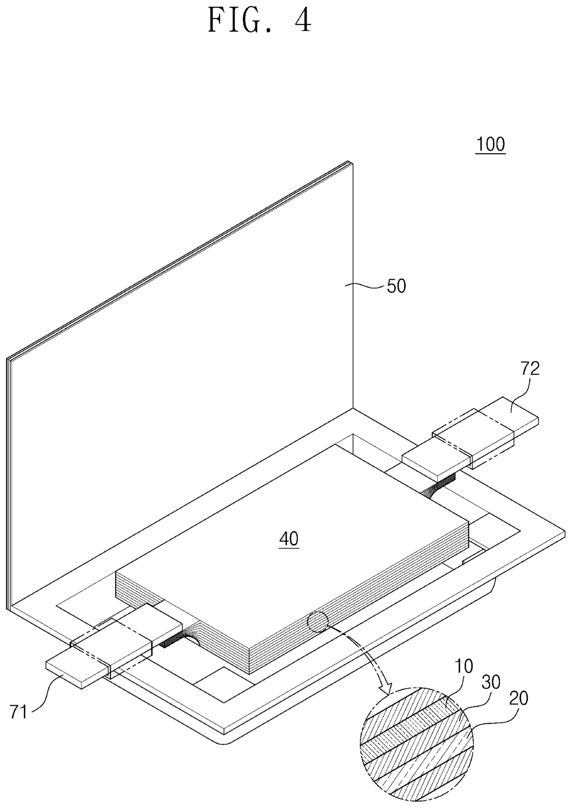

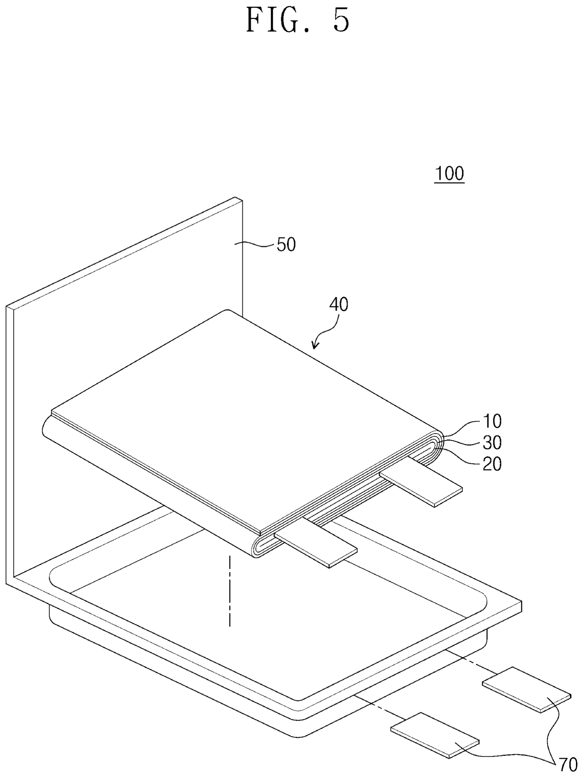

Based on a shape of the rechargeable lithium battery, the rechargeable lithium battery may be classified into a cylindrical, prismatic, pouch, or coin type (kind) battery. FIGS. 2 to 5 illustrate simplified diagrams each showing a rechargeable lithium battery according to one or more embodiments of the present disclosure, with FIG. 2 showing a cylindrical battery, FIG. 3 showing a prismatic battery, and FIGS. 4 and 5 showing pouch-type (kind) batteries. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. In one or more embodiments, the rechargeable lithium battery 100 may include a sealing member 60 that seals the casing 50 as illustrated in FIG. 2. In one or more embodiments, as illustrated in FIG. 3, the rechargeable lithium battery 100 may include a positive electrode lead tab 11, a positive electrode terminal 12, a negative electrode lead tab 21, and a negative electrode terminal 22. In one or more embodiments, as shown in FIG. 4 and FIG. 5, the rechargeable lithium battery 100 may include an electrode tab 70, or a positive electrode tab 71 and a negative electrode tab 72, serving as an electrical path for externally inducing a current generated in the electrode assembly 40.

The rechargeable lithium battery according to one or more embodiments of the present disclosure may be applied to automotive vehicles, mobile phones, and/or any other electrical devices, but embodiments of the present disclosure are not limited thereto.

### Negative Electrode 20

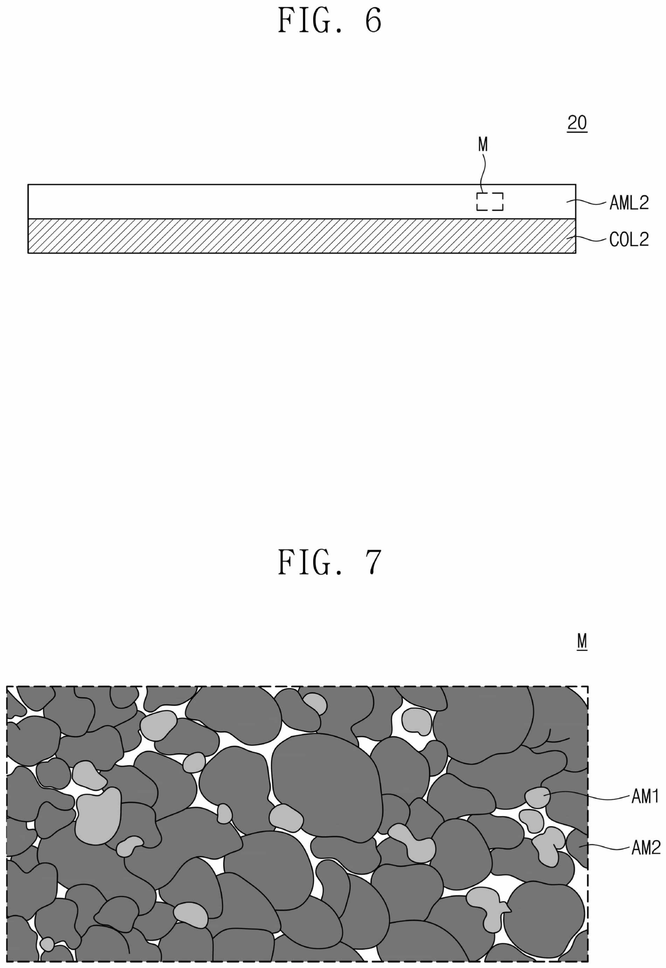

FIG. 6 is a cross-sectional view of a negative electrode according to one or more embodiments of the present disclosure.

Referring to FIG. 6, a negative electrode 20 for a rechargeable lithium battery may include a negative electrode current collector COL2 and a negative electrode active material layer AML2 on the negative electrode current collector COL2.

The negative electrode current collector COL2 may include at least one of copper foil, nickel foil, stainless-steel foil, titanium foil, nickel foam, copper foam, a polymer substrate coated with a conductive metal, or a combination thereof.

A thickness of the negative electrode current collector COL2 may be about 1 micrometer (µm) to about 20 µm. For example, in one or more embodiments, the thickness of the negative electrode current collector COL2 may be about 5 µm to about 15 µm, about 7 µm to about 10 µm, or about 8 µm to about 10µm.

In one or more embodiments, an area of the negative electrode current collector COL2 may be substantially the same as that of the negative electrode active material layer AML2. In one or more embodiments, the area of the negative electrode current collector COL2 may be different from that of the negative electrode active material layer AML2. For example, in one or more embodiments, the area of the negative electrode current collector COL2 may be larger than that of the negative electrode active material layer AML2.

### Negative Electrode Active Material Layer AML2

FIG. 7 is a cross-sectional view of a negative electrode active material layer according to one or more embodiments of the present disclosure, in which a region M of FIG. 6 is enlarged.

Referring to FIG. 7, the negative electrode active material layer AML2 according to one or more embodiments of the present disclosure may include a negative electrode active material (e.g., in a form of particles). The negative electrode active material may include a first negative electrode active material AM1 (e.g., in a form of particles) and may further include a second negative electrode active material AM2 (e.g., in a form of particles). In one or more embodiments, the negative electrode active material layer AML2 may further include a binder and/or a conductive material.

In one or more embodiments, the negative electrode active material layer AML2 may include the first negative electrode active material AM1 and the second negative electrode active material AM2 that are different from each other. The inclusion of the negative electrode active materials having different properties may allow them to serve complementary roles, thereby maximizing or increasing performance of the battery. For example, in one or more embodiments, a Si-based negative electrode active material may be combined with a carbon-based negative electrode active material. A rechargeable lithium battery with high capacity and long-life may be provided by combining a high-capacity Si-based negative electrode active material with a structurally stable carbon-based material.

In the negative electrode active material layer AML2, an amount of the negative electrode active material may be about 95 wt% to about 99 wt% relative to (e.g., based on) a total weight of the negative electrode active material layer AML2.

When the negative electrode active material layer AML2 includes the first negative electrode active material AM1 and further includes the second negative electrode active material AM2, a weight ratio of the first negative electrode active material AM1 to the second negative electrode active material AM2 may be about 1:99 to about 50:50. For example, in one or more embodiments, the weight ratio of the first negative electrode active material AM1 to the second negative electrode active material AM2 may be about 5:95 to about 40:60, or about 10:90 to about 30:70. When the weight ratio of the first negative electrode active materials AM1 to the second negative electrode active material AM2 satisfies the above range, it may have advantages of high-capacity, high-output, and long-life.

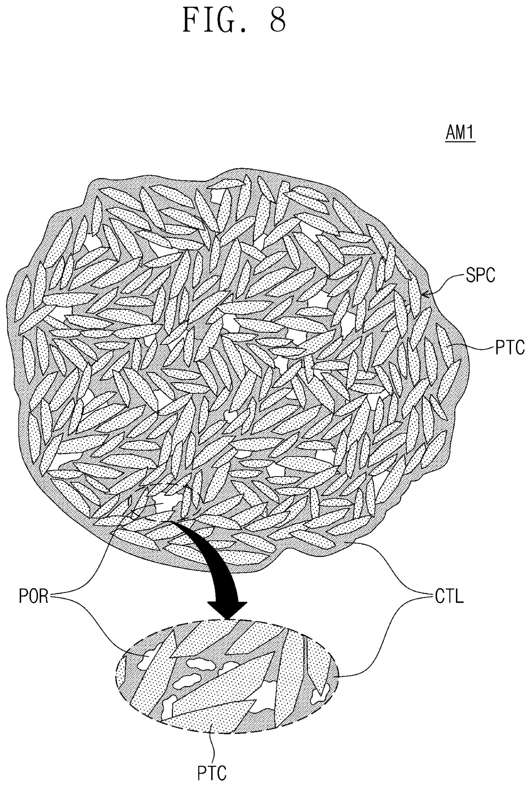

The first negative electrode active material AM1 may include a negative electrode active material according to one or more embodiments of the present disclosure. A detailed description of the first negative electrode active material AM1 will be described in more detail with reference to FIG. 8.

The second negative electrode active material AM2 may be a negative electrode active material different from the first negative electrode active material AM1. In one or more embodiments, the second negative electrode active material AM2 may be a carbon-based material (e.g., in a form of particles). The carbon-based material may include at least one of crystalline carbon, amorphous carbon, or a combination thereof.

The crystalline carbon may include graphite such as irregularly shaped, plate-shaped, flake-shaped, spherical-shaped, or fiber-shaped natural graphite and/or artificial graphite. The amorphous carbon may include soft carbon, hard carbon, mesophase pitch carbide, calcined coke, or a combination thereof. For example, in one or more embodiments, the second negative electrode active material AM2 may include natural graphite. In one or more embodiments, the second negative electrode active material AM2 may include artificial graphite.

If (e.g., when) the negative electrode active material layer AML2 further includes the carbon-based material having excellent or suitable electrical conductivity and structural stability as the second negative electrode active material AM2, a negative electrode having improved performance may be provided.

The binder may serve to improve attachment of the negative electrode active material particles to each other and also to improve attachment of the negative electrode active material to the negative electrode current collector COL2. The binder may include a non-aqueous (e.g., water-insoluble) binder, an aqueous (e.g., watersoluble) binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, a polyvinyl alcohol, or a combination thereof.

When the aqueous binder is used as the binder of the negative electrode, a cellulose-based compound capable of providing viscosity may further be included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may include a fibrillizable polymeric material, for example, may include polytetrafluoroethylene, polyvinylidene fluoride, a polyvinylidene fluoride-hexafluoropropylene copolymer, polyethylene oxide, or a combination thereof.

An amount of the binder may be about 0.5 wt% to about 5 wt% relative to (e.g., based on) the total weight of 100 wt% of the negative electrode active material layer AML2. For example, in one or more embodiments, the amount of the binder may be about 0.8 wt% to about 4 wt%, or about 1 wt% to about 4 wt% relative to (e.g., based on) the total weight of 100 wt% of the negative electrode active material layer AML2. When the amount of the binder satisfies the above-described range, it may suppress or reduce excessive expansion of the negative electrode including a high amount of silicon during charging and discharging.

The conductive material (e.g., electrically conductive material) may be used to provide the electrode with conductivity (e.g., with improved electrical conductivity), and any suitable conductive material that does not cause an undesirable chemical change in the battery may be used as the conductive material. For example, the conductive material may include a carbon-based material such as natural graphite, artificial graphite, carbon black, acetylene black, Ketjen black, carbon fibers, carbon nanofibers, and/or carbon nanotubes; a metal powder or a metal fiber including one or more selected from among copper, nickel, aluminum, and silver; a conductive polymer such as a polyphenylene derivative; and/or a mixture thereof.

An amount of the conductive material may be about 0 wt% to about 0.5 wt% relative to (e.g., based on) the total weight of 100 wt% of the negative electrode active material layer AML2. For example, in one or more embodiments, the amount of the conductive material may be about 0.01 wt% to about 0.5 wt%, about 0.01 wt% to about 0.1 wt%, about 0.01 wt% to about 0.08 wt%, about 0.03 wt% to about 0.09 wt%, or about 0.04 wt% to about 0.08 wt% relative to (e.g., based on) the total weight of 100 wt% of the negative electrode active material layer AML2. When the amount of the conductive material satisfies the above-described range, a sufficient contact area between the negative electrode active materials may be secured. Thus, electrical conductivity of the negative electrode may be improved, and cycle-life characteristics of a rechargeable lithium battery including the same may be increased.

Hereinafter, the first negative electrode active material according to one or more embodiments of the present disclosure will be described in more detail.

FIG. 8 is a cross-sectional view for explaining a first negative electrode active material according to one or more embodiments of the present disclosure.

Referring to FIG. 8, the first negative electrode active material AM1 may include a silicon-carbon composite (e.g., in a form of particle). The silicon-carbon composite may include a secondary particle SPC in which a plurality of primary particles PTC are agglomerated, and a carbon coating layer CTL around (e.g., surrounding) the secondary particle SPC. In one or more embodiments, the first negative electrode active material AM1 may have a core-shell structure in which the secondary particle SPC (i.e., core) including agglomerated primary particles PTC is surrounded by the carbon coating layer CTL (i.e., shell).

The secondary particle SPC may be an agglomerate of the primary particles PTC. For example, the secondary particle SPC may include the primary particles PTC agglomerated with each other. The secondary particle SPC may have a spherical shape or an elliptical shape.

An average particle diameter of the secondary particle SPC may be about 3 µm to about 20 µm. For example, in one or more embodiments, the average particle diameter of the secondary particle SPC may be about 3 µm to about 15 µm, or about 6 µm to about 10 µm. When the average particle diameter of the secondary particle SPC satisfies the above range, lithium ions may diffuse more easily into the negative electrode active material, thereby further improving efficiency and cycle-life characteristics of the rechargeable lithium battery.

In the present disclosure, the average particle diameter may be measured by a particle size analyzer. The average particle diameter may refer to the diameter of particles having a cumulative volume of 50 vol% in a particle size distribution.

Each of the primary particles PTC may include a silicon nanoparticle.

A full width at half maximum FWHM (111) of a diffraction peak of a (111) plane of the silicon nanoparticles, as measured by X-ray diffraction using CuKα radiation, may be in the range of about 0.3° to about 7°. This can be achieved by controlling a size of the silicon nanoparticles or by adjusting manufacturing process of the silicon nanoparticle. When the full width at half maximum of the silicon nanoparticle satisfies the above range, rate characteristics and cycle-life characteristics of the battery may be further improved.

The silicon nanoparticle may be plate-shaped, spherical-shaped, or flake-shaped, but embodiments of the present disclosure are not limited thereto. For example, in one or more embodiments, the silicon nanoparticle may be flake-shaped. The silicon nanoparticle may have a long axis and a short axis. The long axis may be a width of the silicon nanoparticle and the short axis may be a thickness of the silicon nanoparticle.

An aspect ratio (long axis/short axis) of the silicon nanoparticle may be about 5 to about 20. When the aspect ratio of the silicon nanoparticle satisfies the above range, volume expansion of the silicon nanoparticle during charging and discharging may be suppressed or reduced, thereby preventing or reducing structural collapse. Accordingly, the efficiency and cycle-life characteristics of a rechargeable lithium battery having the same may be improved.

An average particle diameter of the silicon nanoparticle may be about 10 nanometers (nm) to about 200 nm. When the average particle diameter of the silicon nanoparticle satisfies the above range, volume expansion of the silicon nanoparticle during charging and discharging may be suppressed or reduced, thereby preventing or reducing structural collapse. Accordingly, the efficiency and cycle-life characteristics of a rechargeable lithium battery having the same may be improved.

An amount of the silicon nanoparticles may be about 40 wt% to about 90 wt% relative to (e.g., based on) a total weight of 100 wt% of the first negative electrode active material AM1. For example, in one or more embodiments, the amount of the silicon nanoparticles may be about 40 wt% to about 80 wt%, about 40 wt% to about 70 wt%, or about 50 wt% to about 70 wt% relative to (e.g., based on) the total weight of 100 wt% of the first negative electrode active material AM1. When the amount of the silicon nanoparticles satisfies the above range, a rechargeable lithium battery exhibiting excellent or suitable capacity and charge/discharge efficiency may be provided, without deterioration in electrical conductivity and cycle-life characteristics.

The carbon coating layer CTL may be provided on the secondary particle SPC. The carbon coating layer CTL may surround the secondary particle SPC. The carbon coating layer CTL may be formed on at least a portion of a surface of the secondary particle SPC. For example, in one or more embodiments, a carbon coating layer CTL may be formed on the entire surface or a part of the surface of the secondary particle SPC.

The carbon coating layer CTL may include an amorphous carbon. For example, the amorphous carbon may include soft carbon, hard carbon, mesophase pitch carbide, calcined coke, or a combination thereof. The carbon coating layer CTL may have excellent or suitable hardness by including the amorphous carbon.

An amount of the amorphous carbon may be about 10 wt% to about 60 wt% relative to (e.g., based on) the total weight of 100 wt% of the first negative electrode active material AM1. For example, in one or more embodiments, the amount of the amorphous carbon may be about 20 wt% to about 60 wt%, about 30 wt% to about 60 wt%, or about 30 wt% to about 50 wt% relative to (e.g., based on) the total weight of 100 wt% of the first negative electrode active material AM1. When the amount of the amorphous carbon satisfies the above range, an internal pore size and pore volume of the silicon-carbon composite, which will be described in more detail later, may be appropriately or suitably adjusted. As a result, a rechargeable lithium battery exhibiting excellent or suitable capacity and charge/discharge efficiency may be provided, without deterioration in electrical conductivity and cycle-life characteristics.

A thickness of the carbon coating layer CTL may be about 1 nm to about 900 nm. For example, in one or more embodiments, the thickness of the carbon coating layer CTL may be about 5 nm to about 800 nm, about 10 nm to about 700 nm, or about 50 nm to about 500 nm. When the thickness of the carbon coating layer CTL satisfies the above range, dense structure of the negative electrode active material may be maintained with excellent or suitable hardness. In addition, an internal pore size and pore volume of the silicon-carbon composite may be adjusted, and an extent of electrolyte penetration into inside of the silicon-carbon composite may be appropriately or suitably controlled or selected. As a result, side reactions with the electrolyte may be minimized or reduced, thereby improving cycle-life characteristics of a rechargeable lithium battery.

The carbon coating layer CTL may surround a surface of each of the plurality of primary particles PTC. In one or more embodiments, the carbon coating layer CTL may further include a grain boundary coating layer in which amorphous carbon is filled between the primary particles PTC. The grain boundary coating layer may be present in a form of filling a part of the pores POR inside the silicon-carbon composite. The grain boundary coating layer may be formed by being applied along interfaces between the primary particles PTC. For example, the grain boundary coating layer may indicate a coating layer applied onto the grain boundary inside the first negative electrode active material AM1.

The inside of the silicon-carbon composite may indicate an entire inside portion of the silicon-carbon composite except for the surface (e.g., outermost surface) of the silicon-carbon composite. For example, the inside of the silicon-carbon composite (i.e., the core) may indicate a remaining region including the plurality of primary particles PTC and the grain boundary coating layer, excluding the outermost surface of the silicon-carbon composite (i.e., the shell).

The carbon coating layer CTL may further include the grain boundary coating layer, and thus the first negative electrode active material AM1 may have greater structural stability and enhanced electrical conductivity.

For example, the carbon coating layer CTL may suppress or reduce side reactions with the electrolyte and form a more stable interface by preventing or reducing the primary particle PTC and the secondary particle SPC formed by the agglomeration of the primary particles PTC from being directly exposed to the electrolyte. The carbon coating layer CTL may effectively suppress or reduce volume expansion of the primary particles PTC. In addition, the carbon coating layer CTL may be present between the primary particles PTC, and may serve as an electron conduction pathway among the amorphous carbon, the primary particles PTC, and the electrolyte, thereby reducing electrode resistance and further improving electrical conductivity.

For example, the carbon coating layer CTL may serve both as the shell formed on the surface of the secondary particle SPC and as the grain boundary coating layer embedded within inter-particle pores (i.e., the pores between the primary particles PTC). The shell and the grain boundary coating layer may include the same carbon material, differing only in their respective locations.

In this disclosure, the grain boundary coating layer may refer to a coating layer located inside the secondary particle PTC that fills the pores between the primary particles PTC, but for convenience of explanation, may also be referred to herein as a carbon coating layer CTL, and the terms may be used interchangeably unless otherwise specified.

In this disclosure, the term "core" may refer to an agglomeration of primary particles PTC and the internal grain boundary coating layer that fills the pores between the primary particles PTC, but explicitly excludes the outer carbon coating layer CTL (i.e., the shell) formed on the surface of the secondary particle SPC.

The term "shell" may refer to the outer carbon coating layer CTL that is formed on the external surface of the secondary particle SPC. The shell is located outside the secondary particle SPC and is not filled inside the pores formed between the primary particles PTC, thereby being distinguishable from the internal grain-boundary carbon layer.

The silicon-carbon composite according to one or more embodiments of the present disclosure may have a porous structure. The silicon-carbon composite may include a plurality of pores POR therein. The plurality of pores POR may be present between the primary particles PTC. The plurality of pores POR may be surrounded by only amorphous carbon. The plurality of pores POR may indicate voids remaining between the primary particles PTC after the amorphous carbon has partially filled the voids therebetween.

The plurality of pores POR may include macro pores. The plurality of pores POR may further include meso pores and/or micro pores. In the present disclosure, macro pores may refer to pores having a pore diameter of about 50 nm or more. The meso pores may refer to pores having a pore diameter greater than about 2 nm and less than about 50 nm. The micro pores may refer to pores having a pore diameter of about 2 nm or less. In the present disclosure, unless otherwise specifically defined, the pore characteristics such as porosity, pore size distribution, pore volume ratio, surface areas, etc. of pores may be measured by one or more suitable methods such as mercury intrusion porosimetry, gas adsorption technique, and/or the like. In one or more embodiments, the pore characteristics such as porosity, pore size distribution, pore volume ratio, surface areas, etc. of pores of the electrode active material may be measured by the Barrett-Joyner-Halenda (BJH) method.

A volume ratio of the macro pores of the silicon-carbon composite may be about 10% to 50% relative to (e.g., based on) a total pore volume of the silicon-carbon composite. For example, in one or more embodiments, the volume ratio of the macro pores of the silicon-carbon composite may be about 10% to about 50%, about 10% to about 40%, or about 20% to about 40% relative to (e.g., based on) the total pore volume of the silicon-carbon composite. In the present disclosure, the volume ratio of the macro pores may refer to a proportion of the volume occupied by the macro pores relative to the total pore volume of the silicon-carbon composite.

When the volume ratio of the macro pores of the silicon-carbon composite satisfies the above range, side reactions between the primary particles PTC and the electrolyte may be suppressed or reduced, and expansion of the primary particles PTC may be reduced. Accordingly, it may provide a rechargeable lithium battery with further improved efficiency and cycle-life characteristics.

When the volume ratio of the macro pores exceeds 50%, a proportion of large pores within the silicon-carbon composite increases. This not only reduces structural stability, but also promotes side reactions with the electrolyte due to these pores, resulting in deterioration of cycle-life characteristics due to electrode expansion during charging and discharging.

The silicon-carbon composite may have a porosity of about 5% or less as measured by the Barrett-Joyner-Halenda (BJH) method. For example, in one or more embodiments, the porosity of the silicon-carbon composite may be about 0.1% to about 5%, about 1% to about 5%, or about 3% to about 5%. The pore volume of the silicon-carbon composite may be about 1 cm³/g to about 6 cm³/g. For example, in one or more embodiments, the pore volume of the silicon-carbon composite may be about 1 cm³/g to about 5 cm³/g, about 2 cm³/g to about 5 cm³/g, or about 3 cm³/g to about 6 cm³/g. When the porosity and the pore volume of the silicon-carbon composite each respectively satisfy the above ranges, side reactions between the primary particles PTC and the electrolyte may be suppressed or reduced, and expansion of the primary particles PTC may be reduced. Accordingly, it may provide a rechargeable lithium battery with further improved efficiency and cycle-life characteristics.

The pore distribution (volume ratio by size), porosity, and pore volume of the silicon-carbon composite may be measured by the Barrett-Joyner-Halenda (BJH) method using an N₂ adsorption-desorption isotherm.

For example, the porosity may be obtained by measuring a pore volume by the Barrett-Joyner-Halenda (BJH) method using an N₂ adsorption-desorption isotherm, and then dividing the measured pore volume by a total volume of the silicon-carbon composite. For example, a pretreatment process may be performed by heating the silicon-carbon composite to about 523 K (Kelvin, absolute temperature) at a rate of about 10 K/min, and maintaining the temperature under a pressure of about 100 mmHg or less for about 2 hours to about 10 hours. Thereafter, the pore volume may be measured in liquid nitrogen adjust to a relative pressure (P/P₀) of about 0.01 torr or less. In this measurement, nitrogen adsorption is performed at about 32 points over a relative pressure range of about 0.01 torr to about 0.955 torr, followed by nitrogen desorption at about 24 points up to a relative pressure of about 0.14 torr. The porosity may be determined from the amount of N₂ measured by the above-described method relative to the volume of the silicon-carbon composite.

As another example, the volume ratio of each of the macro pores, meso pores, and micro pores, and the pore volume of the silicon-carbon composite may be measured by the Barrett-Joyner-Halenda (BJH) method using a porosimetry analyzer (ASAP2020, Micromeritics).

An average particle diameter of the silicon-carbon composite may be about 3 µm to about 20 µm. In the present disclosure, the average particle diameter may be measured by a particle size analyzer. The average particle diameter may refer to the diameter of particles having a cumulative volume of 50 vol% in a particle size distribution. When the average particle diameter of the silicon-carbon composite satisfies the above range, a rechargeable lithium battery having the same exhibits excellent or suitable efficiency and cycle-life characteristics.

According to one or more embodiments of the present disclosure, the negative electrode active material may have a denser structure, thereby reducing internal pore volume and minimizing or reducing side reactions with the electrolyte, which may result in enhanced efficiency and cycle-life characteristics of a rechargeable lithium battery. In addition, according to one or more embodiments of the present disclosure, internal pore volume of the negative electrode active material may be reduced, thereby allowing a decrease in the amount of the amorphous carbon required to control the porosity of the negative electrode active material within a desired or suitable range. For example, the negative electrode active material may include a reduced amount of amorphous carbon, and the amount of silicon exhibiting a high capacity may be increased. As a result, a rechargeable lithium battery with improved efficiency and high capacity may be provided.

Hereinafter, a method for manufacturing the first negative electrode active material according to one or more embodiments of the present disclosure will be described in more detail.

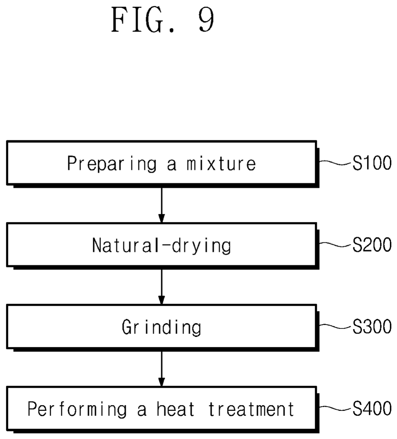

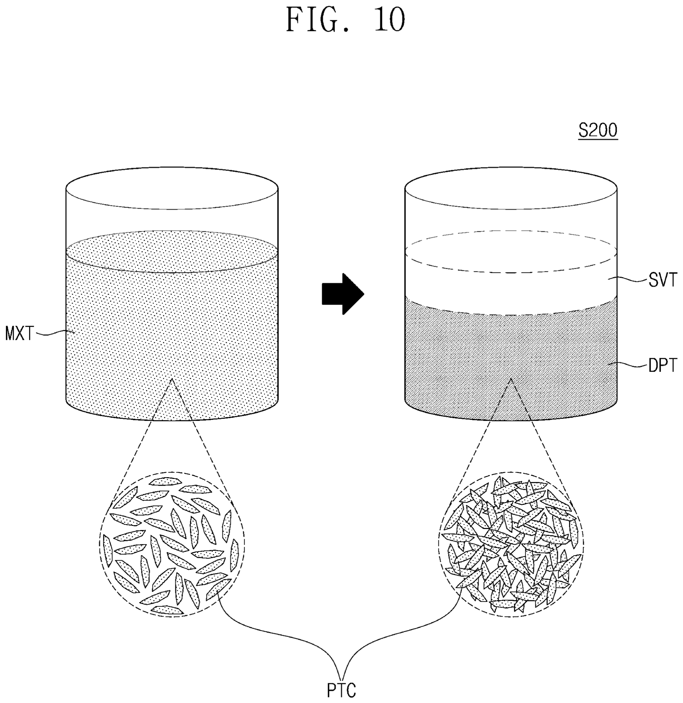

FIG. 9 is a flowchart for explaining a method for manufacturing a first negative electrode active material according to one or more embodiments of the present disclosure. FIG. 10 is a schematic diagram for illustrating step (e.g., act or task) S200 of FIG. 9.

Referring to FIG. 9, a method for manufacturing a first negative electrode active material according to one or more embodiments of the present disclosure may include: preparing a mixture by mixing a silicon precursor and a solvent (S100); natural-drying the mixture to obtain a dried product (S200); grinding the dried product to obtain a ground product (S300); and mixing the ground product with a carbon precursor and performing a heat treatment (S400).

A silicon precursor and a solvent may be mixed to prepare a mixture (S100).

The silicon precursor may be micro-sized bulk silicon, and may also be nano-sized primary particles (see PTC in FIG. 8). In one or more embodiments, the silicon (Si) amount of the silicon precursor may be at least about 99 at % (atomic %).

For example, in one or more embodiments, the silicon precursor may be micro-sized silicon particles (e.g., bulk silicon). The average particle diameter of the silicon precursor may be about 1 µm to about 10 µm.

According to one or more embodiments of the present disclosure, the micro-sized silicon precursor may be ground to form nano-sized silicon particles in a top-down manner. Therefore, if (e.g., when) the bulk silicon is used as the silicon precursor, the mixing may be performed using at least one of a ball mill, a bead mill, or a cutter mill. In this regard, the mill may be made of a chemically inert material that does not react with silicon, such as stainless steel (SUS), or zirconia.

The mixing allows bulk silicon to be ground into nano-sized primary particles (e.g., silicon nanoparticles). The mixing may be performed such that the silicon nanoparticles i.e., the ground bulk silicon, have an average particle diameter of about 10 nm to about 200 nm. For example, the mixing may be performed for about 0.5 hour to about 20 hours. The mixing may be performed at a speed of about 1000 rpm to about 3000 rpm.

In one or more embodiments, the silicon precursor may be nano-sized primary particles (e.g., silicon nanoparticles). The average particle diameter of the primary particles may be about 10 nm to about 200 nm. For example, in one or more embodiments, the average particle diameter of the primary particles may be about 30 nm to about 150 nm, about 50 nm to about 120 nm, or about 50 nm to about 100 nm. The silicon precursor may be obtained by preparing primary particles having the above-described average particle diameter. In these embodiments, the grinding of the silicon precursor described above may not be provided.

The solvent may include an alcohol. For example, in one or more embodiments, the solvent may include at least one of isopropyl alcohol, ethanol, or butanol, but embodiments of the present disclosure are not necessarily limited thereto. Any type (kind) of alcohol that is easily volatilized and does not oxidize the primary particles may be used.

In the mixing process, a dispersant may be further added. For example, the mixture may further include the dispersant. The dispersant may well disperse the silicon precursor in the solvent. For example, in one or more embodiments, the dispersant may include stearic acid, but embodiments of the present disclosure are not limited thereto. Any material capable of effectively dispersing the silicon precursor in the solvent may be used.

If (e.g., when) the mixture further includes the dispersant, the silicon precursor and the dispersant may be mixed in a weight ratio of about 3:1 to about 9:1. When the weight ratio of the silicon precursor to the dispersant satisfies the above range, the dispersant may be uniformly (e.g., substantially uniformly) coated on a surface of each of the primary particles, thereby preventing or reducing oxidation of silicon. The dispersant may be carbonized by a heat treatment process described below and converted into amorphous carbon around (e.g., surrounding) the surface of each of the primary particles.

In one or more embodiments, the mixture may further include an organic material. The organic material may additionally be added together during the mixing process if (e.g., when) the dispersant is introduced. The organic material may be uniformly (e.g., substantially uniformly) coated on the surface of the primary particle during the mixing process, or a grinding process described below, thereby helping to maintain the particle morphology. For example, the organic material may prevent or reduce surface damage or destruction of the primary particles due to an excessive grinding process. The organic material may be carbonized by a heat treatment process described below, and converted into amorphous carbon around (e.g., surrounding) the surface of the primary particle.

For example, the organic material may include at least one selected from among polyacrylic acid (PAA), polyvinyl alcohol (PVA), and polyacrylonitrile (PAN), or a combination thereof, but embodiments of the present disclosure are not limited thereto. The organic material is not particularly limited, as long as it can prevent or reduce deformation or destruction of the primary particles.

If (e.g., when) the mixture further includes the organic material, the silicon precursor and the organic material may be mixed in a weight ratio of about 100:1 to about 100:20. For example, in one or more embodiments, the weight ratio of the silicon precursor to the organic material may be about 100:1 to about 100:10, or about 100:1 to about 100:5. When the weight ratio of the silicon precursor and the organic material satisfies the above range, it may provide a negative electrode active material in which primary particles are more densely agglomerated.

The organic material may be mixed in an appropriate or suitable amount so that the porosity and the volume and/or the volume fraction of the macro pores of the final negative electrode active material satisfies the desired or suitable range. For example, in the above-described weight ratio, as the proportion of the organic material increases, the amount of the amorphous carbon filling the pores between primary particles may increase, thereby decreasing the porosity of the final negative electrode active material and reducing the volume fraction of macro pores including large sized pores.

Referring to FIG. 10, the above-described mixture MXT may be naturally dried to obtain a dried product DPT (S200).

As shown in FIG. 10, the natural-drying may include precipitating the mixture MXT to separate the solvent SVT and the dried product DPT. The dried product DPT may include primary particles PTC separated through the natural-drying process. The solvent SVT separated through the natural-drying process may be removed by evaporation.

The natural-drying may be performed at a temperature of about 20 °C to about 30 °C for about 5 hours to about 20 hours. When the natural-drying process is performed within the above-described temperature and time range, substantially uniform drying may be achieved without causing chemical alteration of the primary particles PTC. When the natural-drying process is performed at a temperature exceeding the above-described temperature range, the solvent may evaporate excessively rapidly, thereby restricting the rearrangement of particles and consequently hindering the formation of a dense structure. For example, under such conditions, the porosity of the final negative electrode active material may increase, and the volume fraction of macro pores may also increase. On the other hand, when the natural-drying process is performed at a temperature below the above-described temperature range, the solvent may evaporate slowly, resulting in uneven drying and an increase in the overall drying time.

In addition, during natural-drying, capillary force acting between the primary particles PTC may draw the particles closer together, as the solvent gradually evaporates. Thus, a secondary particle may be formed in which primary particles PTC are more densely agglomerated through natural drying. As used herein, the term "natural-drying" refers to a drying process conducted at or near ambient temperature (e.g., approximately 20 °C to 30 °C) and atmospheric pressure, without the application of external heat sources such as ovens or hot plates. Natural-drying may be performed in air and typically proceeds over a period of several hours, allowing solvent evaporation to occur gradually.

Accordingly, the total pore volume and porosity of the negative electrode active material may be more effectively reduced, while decreasing the amount of the amorphous carbon required for pore filling. For example, the amount of silicon included in the negative electrode active material may be relatively increased, thereby providing a rechargeable lithium battery with improved capacity and efficiency.

FIG. 10 exemplarily illustrate the natural-drying method, but embodiments of the present disclosure are not limited thereto. The drying method is not particularly limited as long as it may be a method through capillary forces. For example, in one or more embodiments, the drying method may include a vacuum drying method.

Thereafter, the dried product may be ground (S300).

The grinding may be performed such that the ground product has an average particle diameter of about 3 µm to about 20 µm. Because the primary particles PTC aggregate to form an agglomerate during the above-described natural-drying, the grinding may be performed to achieve a desired or suitable particle diameter range. In the present disclosure, an agglomerate may refer to an aggregate or cluster of primary particles without chemical covalent bonds.

The grinding may be performed using at least one of a ball mill, a bead mill, or a cutter mill. In this regard, the mill may be made of a chemically inert material that does not react with silicon, such as stainless-steel (SUS), or zirconia.

The grinding may be performed for an appropriate or suitable time in consideration of a particle diameter of the negative electrode active material to be finally manufactured. At this time, the grinding may be performed under relatively milder condition than the above-described griding process of the silicon precursor. For example, in one or more embodiments, the grinding may be performed for about 1 minute to about 1 hour.

The ground product and the carbon precursor may be mixed and then performed a heat treatment (S400). Thus, a negative electrode active material including a secondary particle formed by agglomerated primary particles, and amorphous carbon on the secondary particle may be manufactured.

The heat treatment may be performed at a temperature of about 700 °C to about 1000 °C for about 1 hour to about 5 hours. The heat treatment may also be performed under a nitrogen atmosphere, a helium atmosphere, or an argon atmosphere. When the heat treatment is performed within the above-described temperature and time range, it may more efficiently fill the internal pores of the secondary particle with the carbon precursor.

The carbon precursor may include at least one of petroleum-based pitch, coal-based pitch, mesocarbon pitch, pitch carbon, or synthetic pitch.

The carbon precursor may be mixed in an appropriate or suitable amount so that the amount of the amorphous carbon in the negative electrode active material satisfies the desired or suitable range. The weight ratio of the ground product to the carbon precursor may be about 90:10 to about 50:50. For example, in one or more embodiments, the weight ratio of the ground product and the carbon precursor may be about 80:20 to about 50:50, or about 70:30 to about 50:50.

The heat treatment allows the carbon precursor to be carbonized and converted into the amorphous carbon. The amorphous carbon may surround a surface of the secondary particle while being filled in the pores within the secondary particle, i.e., between the plurality of primary particles, to surround a surface of each of the plurality of primary particles. For example, the negative electrode active material may have a structure in which amorphous carbon surrounds the surface of the secondary particle and the surface of each of the plurality of primary particles in the secondary particle.

Hereinafter, examples of the present disclosure will be described in more detail as follows. However, the following examples are merely illustrative for facilitating understanding of the present disclosure, and the scope of the present disclosure is not limited thereby.

### Example 1

A mixture was prepared by adding a silicon precursor having an average particle diameter of about 8 µm and stearic acid to an ethanol solvent, and further adding polyacrylic acid (PAA), and performing grinding and mixing for 6 hours by ball milling using a zirconia ball. A weight ratio of the silicon precursor to the stearic acid was about 9:1, and an amount of PAA added was such that a weight ratio of silicon precursor to PAA was about 100:1.

The mixture was naturally dried at a temperature of about 25 °C for about 10 hours to obtain a dried product.

The dried product was ground to obtain a ground product having an average particle diameter of about 8 µm.

A negative electrode active material was prepared by mixing 55 wt% of the ground product and 45 wt% of a mesocarbon pitch and performing a heat treatment at a temperature of about 1000 °C under a nitrogen gas atmosphere.

The prepared negative electrode active material included secondary particles in each of which primary particles (silicon nanoparticles) were agglomerated, and a carbon coating layer around (e.g., surrounding) a surface of each of the primary particles and the secondary particle. In the prepared negative electrode active material, an amount of the silicon nanoparticles was about 55 wt%, and an amount of the amorphous carbon was about 45 wt%.

The prepared negative electrode active material was used as a first negative electrode active material, and natural graphite was used as a second negative electrode active material. A negative electrode active material layer slurry was prepared by mixing the first negative electrode active material, the second negative electrode active material, a styrene-butadiene rubber (SBR) binder, and a carboxymethyl cellulose (CMC) thickener in a weight ratio of about 12:85.5:1.5:1.0 in a water solvent.

The negative electrode active material layer slurry was coated, dried, and rolled on a Cu foil current collector to form a negative electrode active material layer, thereby manufacturing a negative electrode.

The negative electrode, a lithium metal counter electrode, and an electrolyte were used to manufacture a half-cell. As the electrolyte, a mixed solvent of ethylene carbonate and dimethyl carbonate (3:7 by volume) in which 1.1 M LiPF₆ was dissolved was used.

### Example 2

A negative electrode active material was manufactured in substantially the same manner as in Example 1, except that an amount of PAA added was such that the weight ratio of the silicon precursor to PAA was about 100:1.5.

In the prepared negative electrode active material, an amount of the silicon nanoparticles was about 55 wt%, and an amount of the amorphous carbon was about 45 wt%.

A negative electrode and a half-cell were manufactured in substantially the same manner as in Example 1, except that the resulting negative electrode active material was used.

### Example 3

A negative electrode active material was manufactured in substantially the same manner as in Example 1, except that an amount of PAA added was such that the weight ratio of the silicon precursor to PAA was about 100:1.5, natural-drying was performed at a temperature of about 30 °C for 10 hours, and 60 wt% of the ground product was mixed with 40 wt% of the mesocarbon pitch.

In the prepared negative electrode active material, an amount of the silicon nanoparticles was about 60 wt%, and an amount of the amorphous carbon was about 40 wt%.

A negative electrode and a half-cell were manufactured in substantially the same manner as in Example 1, except that the resulting negative electrode active material was used.

### Comparative Example 1

A mixture was prepared by adding a silicon precursor having an average particle diameter of about 8 µm and stearic acid to an ethanol solvent in a weight ratio of about 9:1, and performing grinding and mixing for 6 hours by ball milling using a zirconia ball.

The mixture was spray dried at a temperature of about 150 °C.

A negative electrode active material was prepared by mixing 45 wt% of the product of spray drying and 55 wt% of a mesocarbon pitch and performing a heat treatment at a temperature of about 1000 °C under a nitrogen gas atmosphere.

In the prepared negative electrode active material, an amount of the silicon nanoparticles was 45 wt%, and an amount of the amorphous carbon was 55 wt%.

A negative electrode and a half-cell were manufactured in substantially the same manner as in Example 1, except that the resulting negative electrode active material was used.

### Comparative Example 2

A negative electrode active material was manufactured in substantially the same manner as in Example 1, except that a drying was performed at a temperature of about 100 °C for 10 hours.

In the prepared negative electrode active material, an amount of the silicon nanoparticles was 55 wt%, and an amount of the amorphous carbon was 45 wt%.

A negative electrode and a half-cell were manufactured in substantially the same manner as in Example 1, except that the resulting negative electrode active material was used.

### Evaluation Example 1: Pore Evaluation of Negative Electrode Active Material

For each of the negative electrode active materials according to Examples 1 to 3 and Comparative Examples 1 and 2, pore volume ratio and porosity were measured by a BJH method using a surface area and porosity analyzer (ASAP 2020, Micromeritics).

Each negative electrode active material was pretreated by heating to about 523 K at a rate of about 10 K/min, and maintaining the temperature for about 2 hours to about 10 hours under a vacuum of about 100 mmHg or less. Thereafter, the measurement was conducted by adsorbing nitrogen at about 32 points over a relative pressure (P/P₀) of about 0.01 torr to about 0.955 torr in liquid nitrogen adjusted to a relative pressure of about 0.01 torr or less, followed by desorbing nitrogen at about 24 points up to the relative pressure of about 0.14 torr.

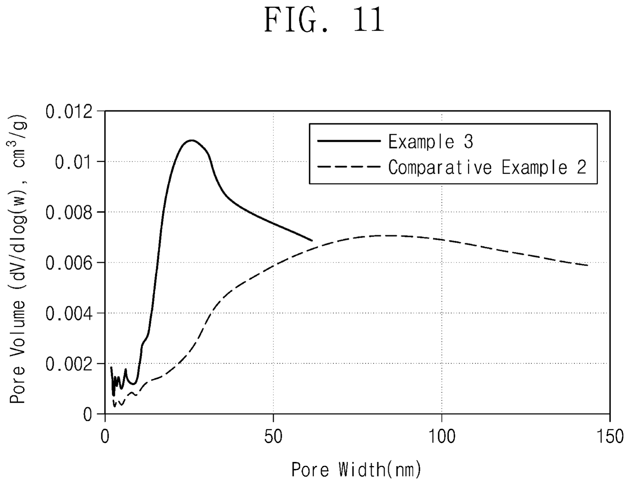

For each of the negative electrode active materials according to Examples 1 to 3 and Comparative Examples 1 and 2, the volume ratio of macro pores having a pore diameter of 50 nm or more to a total pore volume, and porosity are shown in Table 1, and the pore size distribution of the negative electrode active material according to Example 3 and Comparative Example 2 are shown in FIG. 11.

**Table 1**

| | Pore Volume Ratio | Porosity |
|---|---|---|
| Example 1 | Macro pores 40% | 5% |
| Example 2 | Macro pores 30% | 4% |
| Example 3 | Macro pores 20% | 4% |
| Comparative Example 1 | Macro pores 60% | 7% |
| Comparative Example 2 | Macro pores 70% | 15% |

### Evaluation Example 2: Specific Capacity and Efficiency Evaluation

The half-cells manufactured according to Examples 1 to 3 and Comparative Examples 1 and 2 were each charged and discharged once at 0.1 C, and the charge and discharge capacity was measured. The discharge capacity measured are shown in Table 2 as specific capacity.

In addition, a ratio of the discharge capacity to the charge capacity was calculated, and the results are shown in Table 2 as efficiency.

### Evaluation Example 3: Cycle-Life Characteristics Evaluation

The half cells according to Examples 1 to 3 and Comparative Examples 1 and 2 were each charged and discharged 100 times at 1 C, and a ratio of the discharge capacity 100 times to the discharge capacity once was calculated, and the results are shown in Table 2 as capacity retention rate.

**[Table 2]**

| | Specific Capacity (mAh/g) | Efficiency (%) | Capacity Retention Rate (%) |
|---|---|---|---|
| Example 1 | 505 | 91 | 83 |
| Example 2 | 509 | 92 | 84 |
| Example 3 | 510 | 92 | 85 |
| Comparative Example 1 | 495 | 89 | 80 |
| Comparative Example 2 | 485 | 75 | 30 |

Referring to Table 2, it can be confirmed that Examples 1 to 3 each exhibit superior specific capacity, efficiency, and capacity retention compared to Comparative Example 1, in which the spray drying process was performed instead of the natural-drying process, and Comparative Example 2, in which the drying process was performed at a high temperature rather than under natural-drying conditions. For example, Comparative Example 2 showed significantly reduced efficiency and capacity retention rate.

The rechargeable lithium battery according to one or more embodiments of the present disclosure, which includes a negative electrode active material having the volume ratio of the macro pores of about 50% or less, and the porosity of about 5% or less measured by the BJH method, exhibits excellent or suitable capacity, efficiency, and cycle-life characteristics.

The negative electrode active material according to one or more embodiments of the present disclosure has a denser structure, thereby reducing internal pore volume and suppressing or reducing side reactions with the electrolyte. As a result, a rechargeable lithium battery having improved efficiency and cycle-life characteristics may be provided.

For example, the structural and compositional features of the negative electrode active material-such as the controlled porosity, macro pore volume ration, enhanced carbon coating, and utilization of natural-drying-contribute synergistically to enhanced electrochemical performance. The disclosed material design and manufacturing method enable the production of high-performance lithium batteries suitable for applications such as electric vehicles and/or portable electronics, where long cycle life and high energy density are desired.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described with reference to example embodiments, it should be understood that these embodiments are provided for illustrative purposes only and do not limit the scope of the present disclosure. Various modifications and equivalent arrangements may be made without departing from the spirit and scope of the appended claims and equivalents thereof. Accordingly, the described embodiments should be regarded as examples rather than limitations of the present disclosure.

## Claims

1. A negative electrode active material comprising
a silicon-carbon composite,
wherein the silicon-carbon composite comprises:
a secondary particle in which a plurality of primary particles is agglomerated; and
a carbon coating layer around the secondary particle,
wherein the silicon-carbon composite comprises macro pores each having a pore diameter of 50 nm or more,
wherein a volume ratio of the macro pores is 10% to 50% relative to a total pore volume of the silicon-carbon composite,
wherein the primary particle comprises a silicon nanoparticle, and
wherein the carbon coating layer comprises an amorphous carbon.

2. The negative electrode active material as claimed in claim 1, wherein the silicon nanoparticle is flake-shaped.

3. The negative electrode active material as claimed in claim 1 or 2, wherein an aspect ratio of the silicon nanoparticle is 5 to 20.

4. The negative electrode active material as claimed in any of the claims 1 to 3, wherein an average particle diameter of the silicon nanoparticle is 10 nm to 200 nm.

5. The negative electrode active material as claimed in any of the claims 1 to 4, wherein an amount of the silicon nanoparticle is 40 wt% to 90 wt% based on a total weight of 100 wt% of the negative electrode active material.

6. The negative electrode active material as claimed in any of the claims 1 to 5, wherein an amount of the amorphous carbon is 10 wt% to 60 wt% based on a total weight of 100 wt% of the negative electrode active material.

7. The negative electrode active material as claimed in any of the claims 1 to 6, wherein the carbon coating layer surrounds a surface of each of the plurality of primary particles.

8. The negative electrode active material as claimed in any of the claims 1 to 7, wherein the silicon-carbon composite has a porosity of about 5% or less as measured by a Barrett-Joyner-Halenda method.

9. The negative electrode active material as claimed in any of the claims 1 to 8, wherein the total pore volume of the silicon-carbon composite is 1 cm³/g to 6 cm³/g.

10. A method, comprising:
preparing a mixture by mixing a silicon precursor and a solvent;
natural-drying the mixture to obtain a dried product;
grinding the dried product to obtain a ground product; and
mixing the ground product with a carbon precursor and performing a heat treatment,
wherein the method is a method for manufacturing a negative electrode active material.

11. The method as claimed in claim 10, wherein the mixing is performed utilizing at least one of a ball mill, a bead mill, or a cutter mill.

12. The method as claimed in claim 10 or 11, wherein the mixture further comprises an organic material, and
wherein the organic material comprises at least one of polyacrylic acid, polyvinyl alcohol, polyacrylonitrile, or a combination thereof.

13. The method as claimed in any of the claims 10 to 12, wherein the silicon precursor and the organic material are mixed in a weight ratio of 100:1 to 100:20.

14. The method as claimed in any of the claims 10 to 13, wherein the natural-drying comprises precipitating the mixture to separate the solvent and the dried product.

15. The method as claimed in any of the claims 10 to 14, wherein the natural-drying is performed at a temperature of 20 °C to 30 °C for 5 hours to 20 hours.
